# EUROPÄISCHE PATENTSCHRIFT

(11) **EP 2 292 520 B1**
(45) Veröffentlichungstag und Bekanntmachung des Hinweises auf die Patenterteilung: **12.10.2016**
(21) Anmeldenummer: 10008587.7
(22) Anmeldetag: 17.08.2010
(51) Int. Cl.: B65D 33/16, B65D 75/20

(54) **Tabakbeutel**
Tobacco pouch
Sachet à tabac

(30) Priorität: 04.09.2009 DE 102009040096
(43) Veröffentlichungstag der Anmeldung: 09.03.2011
(73) Patentinhaber: Focke & Co. (GmbH & Co. KG), 27283 Verden (DE)
(72) Erfinder: Witzmann, Holger, 88048 Friedrichshafen-Fischbach (DE)
(74) Vertreter: Ellberg, Nils

(56) Entgegenhaltungen:
- EP-A2- 1 683 736
- WO-A1-01/26987
- WO-A1-86/00567
- DE-U1-202005 003 067
- US-A- 3 387 640
- US-A- 3 651 615
- US-A- 4 194 937
- US-A1- 2007 147 712

## Beschreibung

Die Erfindung betrifft eine Beutelpackung aus siegelbarer Folie, insbesondere einen Tabakbeutel mit einer Tasche aus mindestens zwei Taschenwandungen, die randseitig durch Seitennähte miteinander verbunden sind und die eine Beutelöffnung bilden mit einer lösbaren Verschlussnaht zur Verbindung der Taschenwandungen im Bereich der Beutelöffnung, gemäß dem Oberbegriff des Anspruchs 1.

Beutelpackungen aus (thermisch) siegelbarer Folie sind für Lebens- und Genussmittel unterschiedlichster Art bekannt und im Einsatz. Insbesondere wird (geschnittener) Tabak in solchen Beuteln verpackt angeboten. Der Folien-Tabakbeutel besteht in der einfachsten Ausführung aus einem langgestreckten Zuschnitt, der durch Teilumfaltung eine Tasche bildet, die durch Seitennähte begrenzt ist. Taschenwandungen bilden eine sich zwischen den Seitennähten erstreckende Entnahmeöffnung. In deren Bereich sind Verschlussmittel angebracht. Üblicherweise ist eine der Taschenwandungen durch Verlängerung als Wickellasche ausgebildet. Eine solche Packung ist beispielsweise aus EP 1 683 736 A2 bekannt.

Die Erfindung bezieht sich insbesondere auf Tabakbeutel, also Beutelpackungen der vorgenannten Art für Schnitttabak.

Der Erfindung liegt die Aufgabe zugrunde, für Beutel der eingangs genannten Ausführung eine in besonderer Weise ausgebildete und hergestellte Verschlußnaht vorzuschlagen, die eine leichte Handhabung, nämlich ein leichtes, zuverlässiges Öffnen der Tasche gewährleistet und die auf leistungsfähigen Maschinen hergestellt werden kann.

Zur Lösung dieser Aufgabe weist eine erfindungsgemäße Beutelpackung die Merkmale des Anspruchs 1 auf.

Die Siegelung der Folien bzw. Taschenwandungen aus Folie mittels Ultraschall ist überraschend vorteilhaft. Zum einen sind äußerst kurze Taktzeiten für den Siegelvorgang erreichbar. Des Weiteren ist im Vergleich zum thermischen Siegeln (der Folie oder von hotmelt) die Temperatur im Bereich der Verschlussnaht deutlich reduziert, mit entsprechenden Vorteilen für empfindliche Verpackungsgüter.

Erfindungsgemäß ist die Verschlussnaht in besonderer Weise ausgebildet, besteht nämlich aus punktartigen Verbindungen der verschweißten Folien bzw. Taschenwandungen. Insbesondere besteht die Verschlussnaht aus mindestens einer ausgerichteten Reihe von mit geringem Abstand nebeneinander angeordneten Schweiß- bzw. Siegelpunkten, die durch entsprechend ausgebildete Ultraschall-Siegelorgane hergestellt sind.

Weiterhin ist vorteilhaft, wenn der Verschluss der Taschenöffnung aus mindestens zwei parallelen, mit Abstand voneinander angeordneten Siegelnähten aus vorzugsweise je einer Punktreihe besteht.

In besonderer Weise ist auch das Siegelaggregat ausgebildet, nämlich mit einem mittels Ultraschall beaufschlagten Siegelorgan einerseits und einem Gegenorgan (Amboss) andererseits. Die beiden Siegelorgane sind relativ zueinander bewegbar, insbesondere derart, dass der Amboss feststehend und das Ultraschall-Siegelorgan (Sonotrode) beweglich gelagert und gegen die Folie verfahrbar ist.

Weitere Merkmale der Erfindung beziehen sich auf die Ausbildung der Verschluss- bzw. Siegelnaht und auf das Herstellungsverfahren. Einzelheiten des

(Tabak-)Beutels und der Vorrichtung werden nachfolgend anhand der Zeichnungen näher erläutert. Es zeigt:
- Fig. 1: einen Tabakbeutel in Schließstellung, in perspektivischer Darstellung,
- Fig. 2: eine Einzelheit der Beutelpackung gemäß Pfeil II in vergrößertem Maßstab,
- Fig. 3: den Tabakbeutel gemäß Fig. 1 in geöffnetem Zustand,
- Fig. 4: eine Vorrichtung mit Siegelorganen in schematischer Seitenansicht, in Ausgangsstellung,
- Fig. 5: die Vorrichtung gemäß Fig. 4 in Siegeistellung.
- Fig. 6: eine Stellung während des Siegelns bzw. in der Endphase des Siegelns,
- Fig. 7: die Vorrichtung nach Beendigung des Siegelns bei geöffneten Siegelorganen,
- Fig. 8: die Vorrichtung in Draufsicht entsprechend Sichtebene VIII-VIII in Fig. 5,
- Fig. 9: eine Einzelheit IX der Fig. 5 in vergrößertem Maßstab,
- Fig. 10: eine Ansicht einer Siegelbacke des Details gemäß Fig. 9 in der Sichtebene X-X.

In den Zeichnungen ist ein bevorzugter Anwendungsbereich dargestellt. Es geht hier um Beutelpackungen 10 für eine Portion geschnittenen Tabaks, also eine Tabakportion 11. Die Beutelpackung 10 besteht aus einem einzigen, rechteckigen Zuschnitt einer ggf. mehrlagigen Folie, die thermisch bzw. mittels Ultraschall siegelbar ist zur Verbindung von Folienwandungen. Der Beutel 10 ist so ausgebildet, dass durch Umfalten eines Schenkels eine Tasche 12 zur Aufnahme des Inhalts entsteht. Diese ist am Boden durch eine Faltkante 13 und seitlich durch Siegelnähte, nämlich Seitennähte 14, 15, begrenzt und verschlossen. Diese sind durch thermisches Siegeln der Folien oder alternativ durch Ultraschallsiegeln hergestellt, derart, dass durch die Seitennähte 14, 15 eine dauerhaft haltbare Verbindung von die Tasche 12 bildenden Taschenwandungen 16, 17 geschaffen ist.

Die Tasche 12 mit den Taschenwandungen 16, 17 bildet eine Taschenöffnung 18, die sich zwischen den (oberen) Enden der Seitennähte 14, 15 erstreckt. Eine Taschenwandung, nämlich die rückseitige Taschenwandung 17, ist verlängert und bildet eine Wickellasche 19, die mittels Tape 20 in Schließstellung an einer Taschenwandung 16, 17 fixiert ist

Die Taschenöffnung 18 wird bei der Herstellung der Beutelpackung 10, nämlich nach dem Füllen der Tasche 12, mit einem lösbaren Verschluss versehen, nämlich mit einer Verschlussnaht 21. Diese erstreckt sich vorzugsweise über die gesamte Länge der Taschenöffnung 18, vorliegend über die gesamte Breite der Tasche 12, also auch im Bereich der Seitennähte 14, 15. Die Verschlussnaht 21 ist als Peel-Seal-Naht ausgebildet, kann also bei erstmaliger Ingebrauchnahme durch den Konsumenten von Hand geöffnet werden, und zwar durch Auseinanderziehen der Taschenwandungen 16, 17. Die Verschlussnaht 21 ist in besonderer Weise hergestellt, nämlich durch Ultraschallsiegeln. Bei diesem Verfahren werden Siegelorgane oder mindestens ein Siegelorgan bei Anlage an der Folie, nämlich an den Taschenwandungen 16, 17, mit Ultraschallwellen beaufschlagt. Es entsteht dadurch eine Verschlussnaht 21, die hinsichtlich der Festigkeit und der Lösbarkeit exakt dosiert werden kann, und zwar auch unter Anpassung an unterschiedliche Folien.

Erfindungsgemäß ist eine Verschlussnaht 21, die aus mindestens einer fortlaufenden Reihe von punktförmigen Verbindungen der Folien 16,17 besteht. Die Verschlussnaht 21 ist als Punktsiegelung ausgebildet, wobei eine Reihe von in geringen Abständen voneinander angeordneten punktförmigen Folienverbindungen geschaffen wird, und zwar durch entsprechende Ausbildung von Siegelorganen.

Bei dem vorliegenden Ausführungsbeispiel besteht die Verschlussnaht 21 aus zwei Teilnähten 22, 23, von denen jede als Punktnaht ausgebildet ist mit einer fortlaufenden Reihe von punktförmigen Folienverbindungen. Die beiden Teilnähte 22, 23 sind parallel und mit geringem Abstand voneinander angeordnet. Die Teilnähte 22, 23 werden gleichzeitig hergestellt und bilden hier gemeinsam die Verschlussnaht 21.

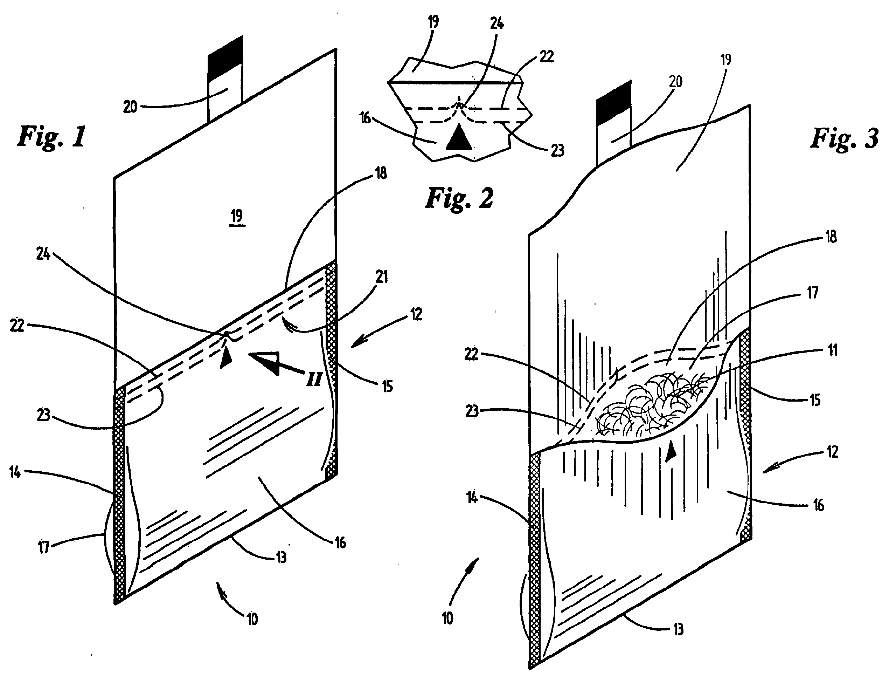

Fig. 1, Fig. 2 zeigt eine Besonderheit, die das Öffnen der Verschlussnaht 21 erleichtert. Die beiden Teilnähte 22, 23 laufen (etwa) mittig zusammen in einer gemeinsamen Zuspitzung 24. Diese bildet eine zur Öffnungsseite gerichtete Erhöhung, die die Einleitung des Öffnungsvorgangs erleichtert.

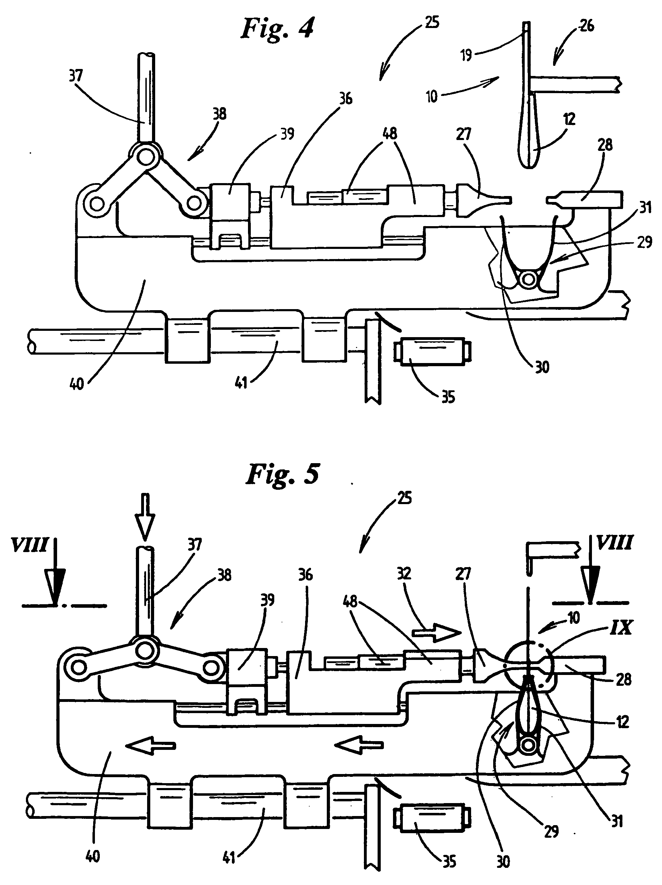

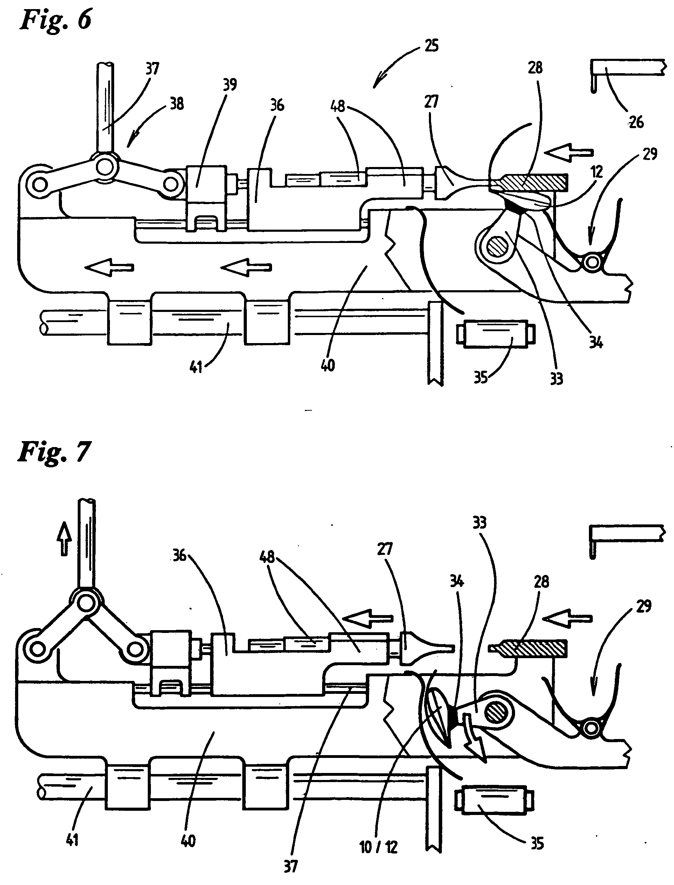

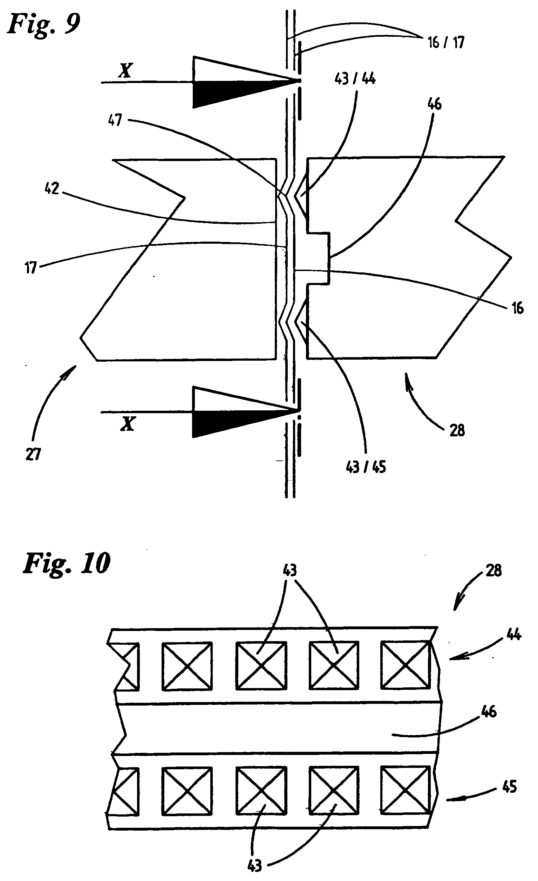

Die Verschlussnaht 21 wird nach Fertigstellung und Füllung der Beutelpackung 10, also im Bereich eines Beutelpackers, angebracht. Fig. 6 bis Fig. 8 zeigen Einzelheiten einer Siegelstation 25 als Teil des oder im Anschluss an den Beutelpacker. Der offene, befüllte Beutel 10 wird von einem Beutelhalter, insbesondere einem Füllrevolver 26 zugeführt. Der zu verschließende Beutel 10 wird in aufrechter Ebene oberhalb der Siegelstation 25 bereitgehalten bzw. oberhalb von Siegelorganen. Diese bestehen hier aus zwei Siegelbacken, nämlich einer mit Ultraschall beaufschlagbaren Sonotrode 27 und einer Gegenbacke, nämlich einem Amboss 28. Die vorgenannten stegartigen Siegelorgane 27, 28 sind relativ zueinander bewegbar, vorliegend in einer horizontalen Arbeitsebene. Der Amboss 28 ist vorzugsweise feststehend angeordnet und die Sonotrode 27 für den Arbeitstakt gegen den Amboss 28 bewegbar. Die miteinander zu verbindenden Folien, nämlich Taschenwandungen 16, 17, befinden sich zwischen den Siegelorganen 27, 28 in einer Klemmstellung (Fig. 5, Fig. 9).

In einer Ausgangsstellung (Fig. 4) sind die Siegelorgane 27, 28 in einem Abstand voneinander angeordnet. Der Beutel 10 wird abwärts bewegt und von einem Beutelhalter 29 aufgenommen. Dieser erfasst im Wesentlichen die Tasche 10 mit in der Form angepassten, nämlich gewölbten, schwenkbaren Haltewandungen 30, 31, die den Beutel 10 bzw. die (gefüllte) Tasche 12 formschlüssig umfassen. Die Tasche 12 ist auf einem unteren Anschlag (Gelenk der Haltewandungen 30, 31) abgestützt, derart, dass sich die miteinander zu verbindenden Bereiche der Taschenwandungen 16, 17 exakt zwischen den Wirkflächen der Siegelorgane 27, 28 befinden (Fig. 5). Die Siegelstellung entsteht durch Verschieben der Sonotrode 27 in Richtung des Pfeils 32 in Fig. 5.

Nach dem Siegeltakt bzw. während desselben, also in der Klemmstellung des Beutels 10 durch die Siegelorgane, wird die Haltevorrichtung mit den Haltewandungen 30, 31 geöffnet. Der Beutel 10 kann nun von einem Förderorgan erfasst werden, hier von einem Schwenkarm 33 mit Saughalter 34 zum Erfassen des Beutels im Bereich der Tasche 12. Die Siegelorgane 27, 28 werden sodann auseinander gefahren (Fig. 7). Der fertige Beutel 10 kann abwärts bewegt und durch den Schwenkarm 33 auf einem Abförderer 35 abgelegt werden.

Das bewegbare Siegelorgan, also die Sonotrode 27, ist an einem horizontal bewegbaren Träger angeordnet, nämlich an einem Schlitten 36. Dieser ist auf einer Führung hin- und herbewegbar, hier auf Gleitstangen 37. Der Schlitten 36 wird in geeigneter Weise im vorliegenden Falle durch eine Betätigungsstange 37, die über einen Kniehebel 38 auf den Schlitten 36 wirkt. Zwischen diesem Betätigungsorgan und der Sonotrode 27 bzw. dessen Schlitten 36 ist ein beaufschlagbares Zwischenorgan angeordnet, nämlich ein Pneumatikzylinder 39. Dieser bewirkt eine Druckbeaufschlagung der Siegelorgane mit gewisser Elastizität.

Der Sonotrode 27 ist eine Ultraschalleinheit 48 zugeordnet, die mit an dem bewegbaren Träger der Sonotrode 27, also am Schlitten 36, angebracht ist. Die Ultraschalleinheit umfasst einen Ultraschallgenerator, der mindestens während der Phase des Siegelns die Sonotrode 27 erregt. Für die Ultraschalleinheit 48 sind unterschiedliche Ausführungen möglich. Vorteilhaft ist ein Ultraschallgenerator mit einer Frequenz von 35 kHz. Der auf die Sonotrode 27 wirkende Druck beträgt vorzugsweise etwa 200 N je Verschlussnaht bzw. Teilnaht 22, 23. Weiterhin ist es vorteilhaft, wenn die Leistung der Sonotrode 27 im Bereich zwischen 180 W bis 260 W je Teilnaht 22, 23 beträgt

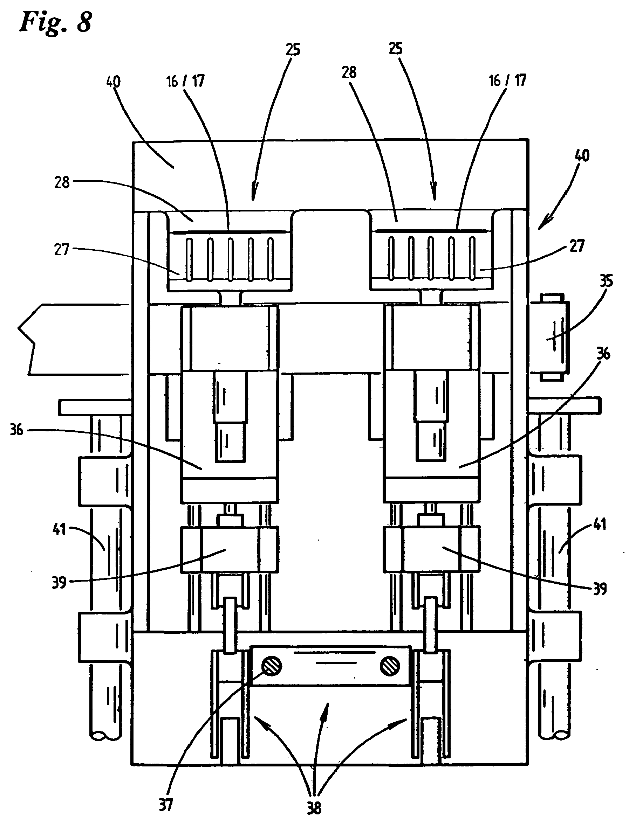

Die Siegelvorrichtung mit den Siegelorganen 27, 28, der Halterung bzw. dem Schlitten 36 und der Betätigungsvorrichtung bilden eine Siegelstation. Zur Erhörung der Leistung kann diese Siegelstation auf doppelbahnige Arbeitsweise des Beutelpackers ausgerichtet werden. Wie in Fig. 8 erkennbar, sind zwei nebeneinanderliegende Siegelstation 25 zu einer Siegeleinheit zusammengefasst. Die beiden Siegelstationen 25 sind mit einem ringsherum laufenden Tragrahmen 40 verbunden. Dieser ist als Einheit auf Tragstangen 41 verfahrbar. Die Betätigung der beiden Siegelstation 25 der Siegeleinheit werden durch eine gemeinsame Betätigungsvorrichtung bewegt, nämlich die Schlitten 36. Das Betätigungsgestänge mit dem Kniehebel 38 wirkt demnach (gleichzeitig) auf beide Siegelorgane 27.

Eine Besonderheit ist die Ausbildung der Siegelorgane. Die Sonotrode 27 weist vorzugsweise eine im Wesentlichen ebene Siegelfläche 32 auf. Diese ist den Folien bzw. den Taschenwandungen 16, 17 in der Siegelstellung zugekehrt Gegenüberliegend ist der Amboss 28 an der den zu verbindenden Folien zugekehrten Seite im Bereich der herzustellenden Siegelnähte 21, 22, 23 mit Vorsprüngen 43 bzw. Erhöhungen versehen. Die Vorsprünge 43 sind mit einem sich zum freien Ende verjüngenden Profil ausgebildet, also insbesondere konisch bzw. spitz zulaufend. Besonders vorteilhaft sind Vorsprünge 43 in der Ausführung als pyramidenförmige Erhöhungen mit einer vorzugsweise quadratischen Grundfläche. Die Vorsprünge 43 bewirken einen örtlich erhöhten, konzentrierten Anpressdruck der Folien 16, 17 an die Siegelfläche 42. Insbesondere bzw. ausschließlich in diesem Bereich findet aufgrund der Ultraschallwirkung eine Verbindung zwischen den Folien, nämlich Taschenwandungen 16, 17 statt. Die punktförmigen Folienverbindungen haben aufgrund der Form der Vorsprünge 43 eine im Wesentlichen quadratische Form mit geringerer Festigkeit der Verbindung im Randbereich dieser quadratischen Verbindungspunkte.

Die Abmessungen der Vorsprünge 43, insbesondere der Pyramiden, sind an das jeweilige Material und an andere Parameter angepasst. Vorzugsweise betragen die Abmessungen eines Vorsprungs 43 im Basisbereich etwa 0,3 mm (quadratisch). Die Höhe der Vorsprünge 43 bzw. Pyramiden ist begrenzt auf 0,03 mm bis 0,08 mm. Bevorzugt ist eine Höhe der Vorsprünge 43 von 0,05 mm. Die Vorsprünge 43 sind in einer fortlaufenden Reihe angeordnet, vorzugsweise mit gleichen Abständen voneinander. Diese Abstände liegen vorzugsweise bei 0,15 mm (Basisabstand). Die Vorsprünge 43 schaffen eine Verschlussnaht 21 bzw. Teilnähte 22, 23 aus einer Mehrzahl von punktförmigen Verbindungen der Folien, und zwar in einer gradlinigen Reihe.

Zur Schaffung einer Verschlussnaht 21 aus insbesondere zwei Teilnähten 22, 23 sind (zwei) Reihen 44, 45 der Vorsprünge im Bereich des Ambosses 28 angeordnet. Der Abstand der Reihen 44, 45 voneinander entspricht dem Abstand der herzustellenden Verbindungsnähte. Zwischen den Reihen 44, 45 ist vorliegend in der Fläche des Siegelorgans 28 eine durchgehende Nut 46 eingeformt.

Die Verschlussnaht kann alternativ auch aus mehr als zwei Teilnähten gebildet sein. Die Form der Vorsprünge 43 kann ebenfalls an Besonderheiten angepasst werden, jedenfalls mit konisch bzw. spitz zulaufendem Profil. Durch die Form der Vorsprünge 43 ergibt sich eine entsprechende örtliche Verformung 47 der miteinander zu verbindenden Folien, sodass diese im Wesentlichen punktförmig, jedenfalls mit kleiner Fläche, an die Siegelfläche 42 angedrückt werden.

**Bezugszeichenliste:**

| | | | |
|---|---|---|---|
| 10 | Beutelpackung | 36 | Schlitten |
| 11 | Tabakportion | 37 | Betätigungsstange |
| 12 | Tasche | 38 | Kniehebel |
| 13 | Faltkante | 39 | Pneumatikzylinder |
| 14 | Seitennaht | 40 | Tragrahmen |
| 15 | Seitennaht | 41 | Tragstange |
| 16 | Taschenwandung | 42 | Siegelfläche |
| 17 | Taschenwandung | 43 | Vorsprung |
| 18 | Taschenöffnung | 44 | Reihe |
| 19 | Wickellasche | 45 | Reihe |
| 20 | Tape | 46 | Nut |
| 21 | Verschlussnaht | 47 | Verformung |
| 22 | Teilnaht | 48 | Ultraschalleinheit |
| 23 | Teilnaht | | |
| 24 | Zuspitzung | | |
| 25 | Siegelstation | | |
| 26 | Füllrevolver | | |
| 27 | Sonotrode | | |
| 28 | Amboss | | |
| 29 | Beutelhalter | | |
| 30 | Haltewandung | | |
| 31 | Haltewandung | | |
| 32 | Pfeil | | |
| 33 | Schwenkarm | | |
| 34 | Saughalter | | |
| 35 | Abförderer | | |

## Patentansprüche

1. Beutelpackung aus siegelbarer Folie, insbesondere Tabakbeutel (10), mit einer Tasche (12) aus mindestens zwei Taschenwandungen (16, 17), die randseitig durch Seitennähte (14, 15) miteinander verbunden sind und die eine Beutelöffnung (18) mit einer lösbaren Verschlussnaht (21) bilden, wobei die Verschlussnaht (21) im Bereich der Taschenöffnung (18) durch Ultraschallsiegeln der miteinander lösbar verbundenen Taschenwandungen (16, 17) hergestellt ist, **dadurch gekennzeichnet, dass** die durch Ultraschallsiegeln hergestellte Verschlussnaht (21) aus mindestens einer Reihe von punktförmigen Verbindungen der Folien bzw. Taschenwandungen (16, 17) besteht, vorzugsweise aus einer fortlaufenden, geradlinigen Reihe von nebeneinander angeordneten Punktverbindungen der Taschenwandungen (16, 17).

2. Beutelpackung nach Anspruch 1, **dadurch gekennzeichnet, dass** die in Reihe angeordneten punktförmigen Verbindungen der Taschenwandungen (16, 17) eine rechteckige oder quadratische Kontur aufweisen und mit Abstand voneinander innerhalb der Reihe zur Bildung der Verschussnaht (21, 22, 23) angeordnet sind.

3. Beutelpackung nach Anspruch 1 oder 2, **dadurch gekennzeichnet, dass** die Verschlussnaht (21) der Taschenöffnung (18) aus mehreren vorzugsweise parallelen Einzelnähten bzw. Teilnähten (22, 23) besteht, vorzugsweise aus zwei Im Abstand voneinander verlaufenden, durch Ultraschallschweißung hergestellten Teilnähten (22, 23), je aus einer Reihe von punktförmigen Verbindungen der Taschenwandungen (16, 17).

4. Beutelpackung nach Anspruch 1 oder einem der weiteren Ansprüche, **dadurch gekennzeichnet, dass** sich die Verschlussnaht (21) bzw. die Teilnähte (22, 23) durchgehend über die volle Breite der Tasche (12) erstrecken, einschließlich des Bereichs der Seitennähte (14, 15).

5. Beutelpackung nach Anspruch 1 oder einem der weiteren Ansprüche, **dadurch gekennzeichnet, dass** die Verschlussnaht (21) bzw. die Teilnähte (22, 23) eine Öffnungshilfe bilden, insbesondere eine zur offenen Seite der Tasche (12) gerichtete Erhöhung bzw. Zuspitzung (24) der Verschlussnaht (21), wobei die mehreren Teilnähte (22, 23) aufgrund entsprechender Formgebung in einem gemeinsamen, die Zuspitzung (24) bildenden Vorsprung zusammenlaufen.

6. Verfahren zum Herstellen von Beutelpackungen aus siegelbarer Folie, insbesondere von Tabakbeuteln (10), mit einer Tasche (12) aus mindestens zwei Taschenwandungen (16, 17), die durch Seitennähte (14, 15) dauerhaft miteinander verbunden sind, wobei die Taschenwandungen (16, 17) eine Taschenöffnung (18) bilden, in deren Bereich eine lösbare Verschlussnaht (21) angeordnet ist, wobei nach dem Füllen der Tasche (12) die Taschenwandungen (16, 17) im Bereich der Taschenöffnung (18) aneinander gedrückt und dabei die Verschlussnaht (21) durch Ultraschallsiegeln hergestellt wird, **dadurch gekennzeichnet, dass** beim Ultraschallsiegeln der Taschenwandungen (16, 17) im Bereich der Taschenöffnung (18) punktförmige Folienverbindungen hergestellt werden, insbesondere als fortlaufende Reihe mit in Abstand voneinander angeordneten Siegelpunkten.

7. Verfahren nach Anspruch 6, **dadurch gekennzeichnet, dass** mindestens zwei parallele Teilnähte (22, 23) zur Bildung einer gemeinsamen Verschlussnaht (21) gleichzeitig durch Ultraschallsiegeln hergestellt werden.

## Claims

1. Pouch made of sealable sheet material, in particular a tobacco pouch (10), having a pocket (12) made of at least two pocket walls (16, 17) which are connected to one another around the periphery by side seams (14, 15) and form a pouch opening (18) with a releasable closure seam (21), wherein the closure seam (21), in the region of the pocket opening (18), is produced by ultrasonic sealing of the pocket walls (16, 17), which are connected to one another in a releasable manner, **characterized in that** the closure seam (21), which is produced by ultrasonic sealing, comprises at least one row of punctiform connections between the sheets or pocket walls (16, 17), preferably a continuous, rectilinear row of punctiform connections arranged one beside the other between the pocket walls (16, 17).

2. Pouch according to Claim 1, **characterized in that** the punctiform connections arranged in a row between the pocket walls (16, 17) have a rectangular or square contour and are spaced apart from one another within the row in order to form the closure seam (21, 22, 23).

3. Pouch according to Claim 1 or 2, **characterized in that** the closure seam (21) of the pocket opening (18) comprises a plurality of preferably parallel individual seams or sub-seams (22, 23), preferably two spaced-apart sub-seams (22, 23) produced by ultrasonic welding, each made of a row of punctiform connections between the pocket walls (16, 17).

4. Pouch according to Claim 1 or one of the further claims, **characterized in that** the closure seam (21) or the sub-seams (22, 23) extends or extend continuously over the entire width of the pocket (12), including the region of the side seams (14, 15).

5. Pouch according to Claim 1 or one of the further claims, **characterized in that** the closure seam (21) or the sub-seams (22, 23) forms or form an opening aid, in particular an elevation or peak (24) in the closure seam (21), said elevation or peak being directed towards the open side of the pocket (12), wherein the plurality of sub-seams (22, 23) come together, on account of appropriate shaping, in a common protrusion which forms the peak (24).

6. Method of producing pouches made of sealable sheet material, in particular tobacco pouches (10), having a pocket (12) made of at least two pocket walls (16, 17) which are connected permanently to one another by side seams (14, 15), wherein the pocket walls (16, 17) form a pocket opening (18), in the region of which a releasable closure seam (21) is arranged, wherein, once the pocket (12) has been filled, the pocket walls (16, 17) are pushed against one another in the region of the pocket opening (18) and the closure seam (21) is produced in the process by ultrasonic sealing, **characterized in that**, during the ultrasonic sealing of the pocket walls (16, 17), punctiform sheet connections are established in the region of the pocket opening (18), in particular in the form of a continuous row of spaced-apart sealing points.

7. Method according to Claim 6, **characterized in that** at least two parallel sub-seams (22, 23) are produced simultaneously by ultrasonic sealing in order to form a common closure seam (21).

## Revendications

1. Emballage en sachet constitué d'un film scellable, en particulier sachet de tabac (10), comprenant une poche (12) constituée d'au moins deux parois de poche (16, 17), qui sont connectées l'une à l'autre du côté des bords par des cordons latéraux (14, 15) et qui forment une ouverture de sachet (18) avec un cordon de fermeture détachable (21), le cordon de fermeture (21) étant fabriqué dans la région de l'ouverture de poche (18) par scellage par ultrasons des parois de poche (16, 17) connectées de manière détachable l'une à l'autre, **caractérisé en ce que** le cordon de fermeture (21) fabriqué par scellage par ultrasons se compose d'au moins une rangée de liaisons ponctuelles des films ou des parois de poche (16, 17), de préférence d'une rangée continue rectiligne de liaisons ponctuelles disposées les unes à côté des autres des parois de poche (16, 17).

2. Emballage en sachet selon la revendication 1, **caractérisé en ce que** les liaisons ponctuelles disposées en rangées des parois de poche (16, 17) présentent un contour rectangulaire ou quadratique et sont disposées à distance les unes des autres à l'intérieur de la rangée pour former le cordon de fermeture (21, 22, 23).

3. Emballage en sachet selon la revendication 1 ou 2, **caractérisé en ce que** le cordon de fermeture (21) de l'ouverture de poche (18) se compose de plusieurs cordons individuels ou de cordons partiels (22, 23) de préférence parallèles, de préférence de deux cordons partiels (22, 23) fabriqués par soudage par ultrasons, s'étendant à distance l'un de l'autre, chacun constitué d'une rangée de liaisons ponctuelles des parois de poche (16, 17).

4. Emballage en sachet selon la revendication 1 ou l'une quelconque des autres revendications, **caractérisé en ce que** le cordon de fermeture (21) ou les cordons partiels (22, 23) s'étendent en continu sur toute la largeur de la poche (12), y compris la région des cordons latéraux (14, 15).

5. Emballage en sachet selon la revendication 1 ou l'une quelconque des autres revendications, **caractérisé en ce que** le cordon de fermeture (21) ou les cordons partiels (22, 23) forment un auxiliaire d'ouverture, en particulier un rehaussement ou une terminaison en pointe (24) du cordon de fermeture (21), orienté vers un côté ouvert de la poche (12), la pluralité de cordons partiels (22, 23) convergeant, de par la mise en forme correspondante, en une saillie commune, formant la terminaison en pointe (24).

6. Procédé de fabrication d'emballages en sachet constitués de films scellables, en particulier de sachets de tabac (10), comprenant une poche (12) constituée d'au moins deux parois de poche (16, 17), qui sont connectées de manière durable l'une à l'autre par des cordons latéraux (14, 15), les parois de poche (16, 17) formant l'ouverture de poche (18) dans la région de laquelle est disposé un cordon de fermeture détachable (21), les parois de poche (16, 17), après le remplissage de la poche (12), étant pressées l'une contre l'autre dans la région de l'ouverture de poche (18) et le cordon de fermeture (21) étant ainsi fabriqué par scellage par ultrasons, **caractérisé en ce que** lors du serrage par ultrasons des parois de poche (16, 17) dans la région de l'ouverture de poche (18), des liaisons de film ponctuelles sont formées, en particulier sous forme de rangée continue avec des points de scellage disposés à distance les uns des autres.

7. Procédé selon la revendication 6, **caractérisé en ce qu'**au moins deux cordons partiels parallèles (22, 23) sont fabriqués simultanément par scellage par ultrasons pour former un cordon de fermeture commun (21).
